# DEMANDE DE BREVET EUROPEEN

(11) **EP 0 676 572 A1**
(43) Date de publication de la demande: **11.10.1995**
(21) Numéro de dépôt: 94490030.7
(22) Date de dépôt: 05.07.1994
(51) Int. Cl.: F16K 17/38

(54) **Clapet à battant avec fermeture automatique en cas d'incendie**

(30) Priorité: 11.04.1994 FR 9404568
(71) Demandeur: S.A. MALBRANQUE Société Anonyme dite :, F-59480 Illies (FR)
(72) Inventeur: Bournet, Jean-Louis, F-62410 Wingles (FR); Boselli, Marc, F-62138 Haisnes (FR)
(74) Mandataire: Lepage, Jean-Pierre

(57) **Abrégé**

Clapet à battant à fermeture automatique destiné à isoler les tuyauteries ou une partie d'une installation de raffinage et de stockage de produits pétroliers plus particulièrement adapté en cas d'incendie comprenant :
- un corps de clapet et son siège,
- un clapet proprement dit articulé autour d'un arbre pour passer d'une position d'exploitation normalement ouverte à une position incendie ou sécurité normalement fermée en appui sur le siège.

Selon l'invention, il est caractérisé par le fait qu'il présente :
- des moyens élastiques travaillant à la compression et autorisant, même en cas d'incendie, l'entraînement de l'arbre,
- des fusibles pilotant les moyens élastiques,
- des moyens de guidage des moyens élastiques pour poursuivre l'action du ressort même s'il est endommagé,
pour faciliter le fonctionnement en cas d'incendie et réaliser une fermeture automatique étanche et positive.

Application dans le domaine de l'exploitation des installations pétrolières incluant les réservoirs, conduits, vannes et robinetterie en général susceptibles d'être montées sur lesdites installations.

## Description

La présente invention est relative à un clapet à battant avec fermeture automatique en cas d'incendie dans les installations pétrolières.

Elle trouvera plus particulièrement son application dans le domaine de l'exploitation des installations pétrolières incluant les réservoirs, conduits, vannes et robinetterie en général susceptibles d'être montées sur lesdites installations.

L'invention concerne un clapet à battant avec fermeture automatique destiné à isoler les tuyauteries ou une partie d'une installation de raffinage ou de stockage des produits pétroliers, plus particulièrement adapté en cas d'incendie.

Les installations de raffinage ou de stockage des produits pétroliers comprennent d'une façon générale des cuves dans lesquelles sont stockés des produits bruts ou raffinés en très grand volume.

Jusqu'à présent, ces installations étaient mal protégées, ce qui a provoqué des accidents graves en cas d'incendies.

En effet, lorsqu'il y a une rupture accidentelle d'une canalisation à proximité d'un très grand réservoir de stockage de produits dangereux, cette rupture peut provoquer un incendie alimenté.

Ainsi, les canalisations qui servent normalement à remplir ou à vider les grands réservoirs de stockage, lorsqu'elles sont coupées, provoquent des pertes importantes de produit. Du point de vue de la sécurité, ces ruptures de canalisations sur des réservoirs non protégés font que l'incendie lui-même est alimenté par un produit très fortement combustible en provenance des réservoirs qui se vident. On auto-alimente l'incendie par le liquide combustible qui s'écoule du réservoir.

Il est donc apparu nécessaire dans le domaine pétrolier des réservoirs de raffinage ou de stockage mais aussi dans d'autres domaines comme les centrales électriques ou les centrales nucléaires, d'isoler les installations et les réservoirs.

On a ainsi déjà pensé à provoquer cet isolement au moyen de vannes disposées entre l'installation et le réservoir, qui étaient pilotées par des automatismes. Il est apparu à l'expérience que ces automatismes pouvaient être détruits par l'incendie lui-même ou pouvait tout simplement ne pas fonctionner.

Les dispositifs permettant d'isoler un circuit de fluide en cas d'incendie n'ont pas à ce jour donné satisfaction.

La sécurité est en général obtenue par une combinaison de différents moyens tels que vannes, vérins ou systèmes de sécurité destinés à couper automatiquement le circuit de fluide en cas d'incendie.

Ces automatismes n'ont pas particulièrement donné satisfaction et ils étaient également appliqués dans des situations particulières, notamment pour la protection des têtes de puits des champs pétroliers.

Ces dispositifs ne permettent pas une bonne intervention et une bonne sécurité sur les installations de raffinage et de stockage des produits pétroliers.

Les clapets à battant qui étaient utilisés jusqu'à présent avaient une fonction très précise pour éviter le retour de fluide sur une pompe (coup de bélier).

Les dispositifs connus actuellement pour isoler automatiquement les tuyauteries d'une installation de raffinage ou de stockage de produits pétroliers présentent donc de nombreux inconvénients puisqu'ils risquent d'être détruits au cours de l'incendie et que leur automatisme n'est pas souvent fiable ce qui provoque des déclenchements intempestifs.

La présente invention vise à remédier à ces inconvénients et à cet effet, un de ses premiers buts est de réaliser un clapet à battant avec fermeture automatique pour isoler des tuyauteries ou partie d'une installation telle qu'une centrale nucléaire ou un réservoir dans les raffineries de pétrole ou le stockage des hydrocarbures permettant de réaliser une fermeture complètement automatique et donc sans intervention humaine ou sans mise en place d'un automatisme qui pourrait être détruit par l'incendie.

Un autre but du clapet à battant à fermeture automatique selon l'invention est d'être à passage intégral c'est-à-dire que le clapet ne gênera pas le passage du fluide sur la canalisation en position ouverte, c'est-à-dire pendant une phase d'exploitation dans la marche normale sans problème particulier de sécurité.

Un autre avantage du clapet à battant à fermeture automatique selon l'invention est de mettre en oeuvre une sécurité positive absolue en cas de risque, incendie, rupture de canalisation, explosion, coupure de courant ou de fluide moteur qui permettra de fermer la canalisation sans intervention humaine ni pilotage, cette fermeture s'effectuant de façon étanche pour protéger les réservoirs ou les installations.

Un autre but du clapet à battant à fermeture automatique selon l'invention est que cette fermeture soit étanche et que l'étanchéité continue à garder sa fonction même dans des conditions difficiles d'un incendie. Les matériaux constituant les différents éléments du clapet seront choisis avec beaucoup de soins, acier inoxydable réfractaire ou joint en graphite résistant au feu pour éviter une détérioration pendant le feu.

Un autre objet du clapet à battant à fermeture automatique selon l'invention est de réaliser sur le plan de la structure des éléments une conception particulière qui favorise la libre dilatation de certaines pièces du clapet afin qu'il conserve un fonctionnement normal malgré les températures de l'incendie qui peuvent atteindre 800°C. On cherchera aussi à diminuer le nombre des pièces d'étanchéité pour qu'il y ait moins de zone à risque où pourraient se produire les fuites.

Un autre but du clapet à battant à fermeture automatique selon l'invention est de pouvoir injecter directement à travers le clapet un fluide pour éteindre les incendies alimentés par le réservoir. On peut injecter de l'eau qui soulève le clapet et éteint l'incendie dans le réservoir. Un avantage important du clapet selon l'invention est que, si l'on arrête l'injection d'eau, le clapet se referme automatiquement et le mécanisme applique de façon continue le clapet sur son siège.

Un autre objet du clapet à battant à fermeture automatique selon l'invention est de réaliser entre le clapet et son siège une étanchéité métal-métal sans joint qui ne risque pas de se détruire ni de provoquer des fuites.

Un autre but du clapet à battant à fermeture automatique selon l'invention est de pouvoir placer plusieurs sécurités en série qui sont pilotées soit par le feu, soit par une coupure de courant ou coupure de fluide moteur tel que de l'air comprimé.

Un autre avantage du clapet à battant à fermeture automatique selon l'invention est de mettre en oeuvre des fusibles pilotés par le feu qui ne subissent pas d'effort de cisaillement ou de rupture mais qui sont au contraire simplement fondus par l'action de l'incendie, ce qui libère les moyens élastiques du clapet.

Un autre objet du clapet à battant à fermeture automatique selon l'invention est de toujours prévoir un effort de fermeture de ce clapet sur son siège et ceci quelles que soient les phases d'utilisation, c'est-à-dire notamment la phase d'exploitation normale, la phase inhabituelle d'incendie ou la phase d'injection d'eau dans le clapet pour éteindre l'incendie avant de revenir à une fermeture étanche du clapet.

Un autre objet du clapet à battant à fermeture automatique selon l'invention est que les moyens élastiques et notamment le ressort mis en oeuvre travaillent à la compression, c'est-à-dire qu'ils exercent un couple de fermeture et donc en permanence un effort de fermeture du clapet sur son siège et ceci quelle que soit la phase d'exploitation d'incendie ou d'injection d'eau.

Un autre avantage du clapet à battant à fermeture automatique selon l'invention est que l'eau injectée dans le clapet en vue d'éteindre l'incendie doit l'être à une certaine pression par exemple supérieure à trois bars pour vaincre le ressort du clapet.

Un autre but du clapet à battant à fermeture automatique selon l'invention est que, en cas d'incendie, les moyens élastiques et notamment le ressort travaillant à la compression ne subissent pas de détérioration. Normalement, ce ressort ne doit pas être endommagé mais s'il l'était (rupture de spire), le ressort continuerait alors à être guidé et il exercerait toujours une poussée sur l'arbre. Cet avantage est donné par un ressort travaillant à la compression alors qu'il ne serait pas obtenu par exemple par un ressort travaillant à la torsion qui lui pourrait casser pendant l'incendie et stopper toute action de couple sur l'arbre.

A cet effet, le clapet à battant à fermeture automatique selon l'invention destiné à isoler les tuyauteries ou une partie d'une installation de raffinage et de stockage de produits pétroliers plus particulièrement adapté en cas d'incendie comprenant :
- un corps de clapet et son siège,
- un clapet proprement dit articulé autour d'un arbre pour passer d'une position d'exploitation normalement ouverte à une position incendie ou sécurité normalement fermée en appui sur le siège,
est caractérisé par le fait qu'il présente :
- des moyens élastiques travaillant à la compression et autorisant, même en cas d'incendie, l'entraînement de l'arbre,
- des fusibles pilotant les moyens élastiques,
- des moyens de guidage des moyens élastiques pour poursuivre l'action du ressort même s'il est endommagé,
pour faciliter le fonctionnement en cas d'incendie et réaliser une fermeture automatique étanche et positive.

L'invention sera bien comprise en se référant à la description suivante d'un mode d'exécution non limitatif illustré par les dessins annexés dans lesquels :
- la figure 1 est une vue en coupe du clapet à battant avec fermeture automatique équipé de ses deux sécurités et dont la fermeture est commandée par un ressort,
- la figure 2 est une variante du clapet à battant à sécurité positive selon la figure 1 dans laquelle on utilise une fermeture par contrepoids,
- la figure 3 est une vue d'une implantation clapet à battant avec fermeture automatique selon l'invention pour isoler les tuyauteries de l'installation de stockage, la figure 3 montre en traits pleins la position du clapet dans une phase incendie ou injection d'eau alors que la vue en pointillés montre la position du clapet dans une situation d'exploitation normale.

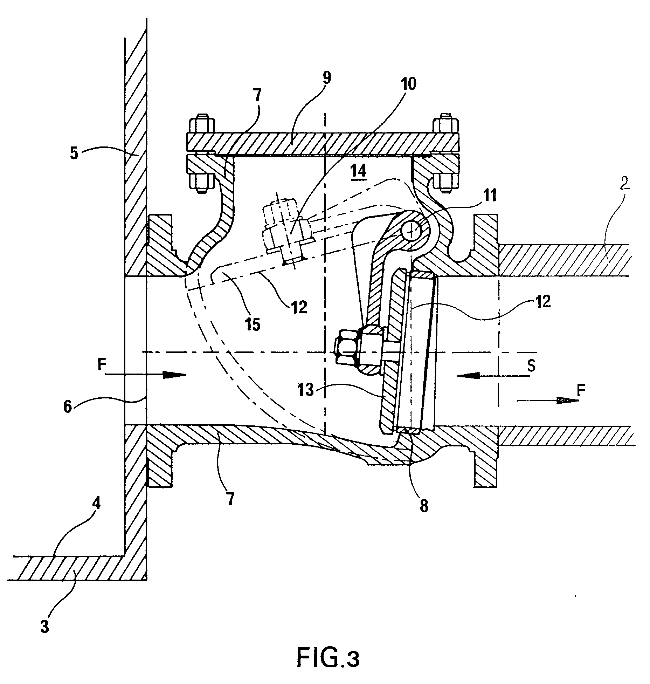

On se réfère aux figures et notamment à la figure 3 qui montre un clapet à battant désigné généralement par (1) qui est exploité avec les différents buts et objets de la présente invention comme étant un clapet à fermeture automatique plus particulièrement destiné à isoler des tuyauteries schématisées en (2). Cette tuyauterie relie normalement une installation de stockage (3) ou de raffinage par exemple de produits pétroliers.

Cette installation (3) est naturellement d'une très grande capacité et il peut s'agir par exemple d'une cuve de stockage ou de raffinage. Cette cuve (3) comporte par exemple un fond (4) et une paroi verticale (5) dans laquelle est aménagée à la base une ouverture (6).

Selon les applications, cette ouverture (6) sert au remplissage ou à la vidange de l'installation (3) par l'intermédiaire des tuyauteries (2).

Les produits contenus dans l'installation (3) sont souvent dangereux ou inflammables, c'est pourquoi il est nécessaire de prévoir une sécurité entre l'ouverture (6) et les tuyauteries (2). Au-delà de la tuyauterie (2) peut être relié par exemple un camion citerne qui vient opérer une vidange ou un remplissage du liquide contenu dans l'installation (3).

Différents accidents ont pu se produire par exemple en cas de rupture de la canalisation (2), il faut éviter que le liquide de la cuve (3) ne s'écoule sur le sol par l'orifice (6).

Les différents dispositifs automatiques connus étaient par exemple constitués de vannes pilotées automatiquement disposées entre les tuyauteries (2) et l'installation (3). Ces vannes étaient très souvent détruites par l'incendie lui-même et il y avait un risque car le liquide pouvait continuer à s'échapper.

L'invention qui consiste à interposer entre la tuyauterie (2) et l'installation (3) un clapet (1) est intéressante car elle permet en utilisant de façon nouvelle le clapet à battant d'obtenir une fermeture automatique qui sera étanche et positive en cas d'incendie.

Le clapet (1) comprend un corps de clapet (7) et dans ce corps un siège (8). Ce corps est fermé à sa partie supérieure par un chapeau boulonné (9), ce chapeau permet de fermer la partie supérieure du clapet.

Pendant la phase d'exploitation normale, le fluide passe à travers l'orifice (6) et circule dans le clapet dans le sens des flèches F. A cette exploitation en situation normale sans risque correspond une position du clapet proprement dit (10) à la figure 3 qui est représentée en pointillés.

Le clapet (10) est articulé autour d'un arbre (11) et il comprend une partie (12) circulaire qui peut passer de la position en pointillés de la figure 3 à la position en traits pleins schématisée par (13) dans laquelle la partie périphérique (12) du clapet vient en appui sur le siège (8).

Le clapet articulé passe donc d'une position d'exploitation normale dans laquelle le clapet (10) est ouvert, c'est-à-dire qu'il permet un passage intégral du fluide sur toute la section de la canalisation (2) et sur toute la section de l'orifice (6). Pour cela, dans sa position d'exploitation normale (10), le clapet est contenu dans une chambre excentrée par rapport à la canalisation (2). Ainsi, l'extrémité (15) du clapet ne déborde pas dans la canalisation (2) et permet le passage intégral et continu du fluide.

Le dispositif de sécurité qui sera ultérieurement décrit et qui permettra de commander le clapet agira au niveau de l'arbre (11) pour passer d'une position d'exploitation normale (10) en pointillés à une position incendie (13) en traits pleins.

Le clapet selon l'invention a également été conçu pour réaliser pendant la phase d'incendie correspondant à la position (13) une fermeture automatique étanche et positive du clapet.

La fonction automatique du clapet est importante car elle ne doit pas être mise en oeuvre par la main de l'homme et elle ne doit pas non plus risquer d'être détruite par l'incendie lui-même.

On comprend également que la fonction d'étanchéité du clapet dans sa position (13) en appui sur le siège (8) est également importante car c'est elle qui permettra d'isoler la tuyauterie (2) de l'installation (3), par exemple lorsque le clapet sera fermé en position (13) de façon étanche, le fluide ne pourra plus s'écouler à l'extérieur par l'orifice (6) vers les tuyauteries (2).

Un des autres avantages importants du clapet selon l'invention est que, dans la position incendie (13), tout en assurant une étanchéité sur le siège (8) en position de fermeture, ce clapet permet également d'injecter un produit pour lutter contre l'incendie, par exemple de l'eau, dans le sens de la flèche S. Cette injection se fera à partir d'une pression de quelques bars pour vaincre les moyens élastiques pilotant le clapet en autorisant son ouverture réduite. Dans ce cas, l'ouverture n'a pas besoin d'aller jusqu'à la position (10). Dès que l'injection du fluide cesse dans le sens de la flèche S, le clapet revient automatiquement et naturellement dans une position (13) de fermeture étanche. Cette position sera maintenue tant que l'incendie n'est pas vaincu et que l'exploitation ne peut pas être remise en situation d'exploitation normale correspondant à la position (10).

La rotation du clapet autour de l'arbre (11) est réalisée de façon automatique et donc sans intervention humaine ou d'un automatisme pouvant être détruit par l'incendie.

Il faut entendre par incendie un risque considéré comme tel par l'exploitant qui pourrait aussi être étendu à d'autres événements liés à la sécurité tels qu'une rupture de canalisation, une explosion, ou une coupure de courant qui permettront de fermer les canalisations ou tuyauteries (2) de façon étanche pour protéger les réservoirs et installations (3). Ces incendies pourront être combattus en injectant directement à travers le clapet un fluide extincteur. Ce fluide, par exemple l'eau, soulèvera le clapet et éteindra l'incendie dans le réservoir (3). Si l'on arrête l'injection d'eau, le clapet selon l'invention se referme automatiquement et le clapet proprement dit s'applique de façon continue et étanche sur son siège.

A cet effet, on a prévu de réaliser une étanchéité entre le clapet (13) et le siège (8) qui est de type métal-métal sans mettre en oeuvre de joint d'étanchéité pouvant être détérioré par le feu ou provoquer des fuites.

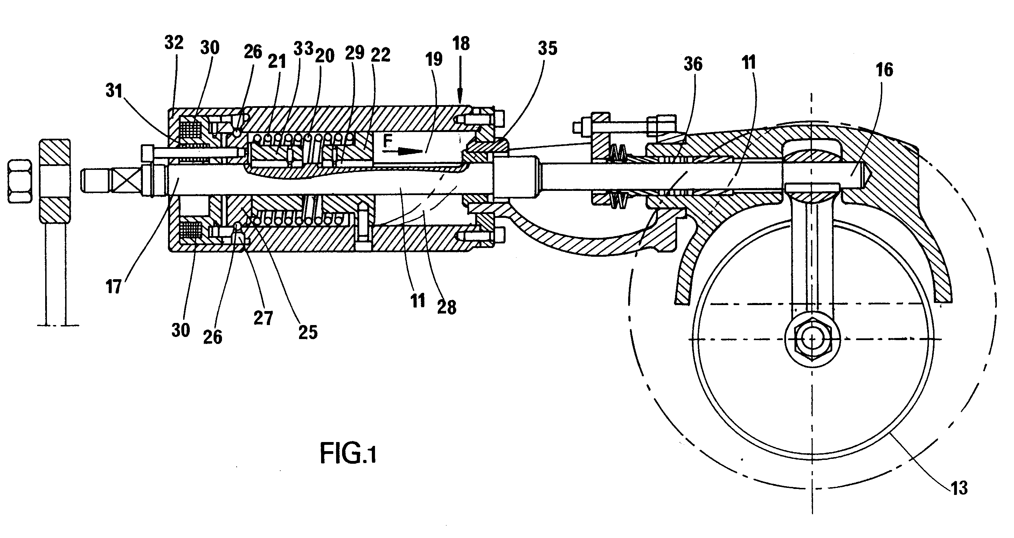

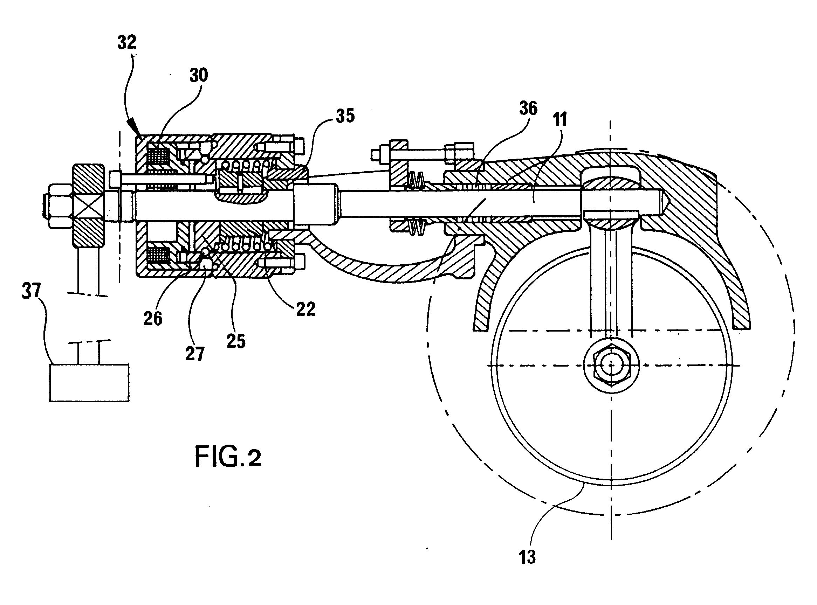

On se réfère aux figures 1 et 2 qui montrent le clapet à battant de sécurité positive avec respectivement fermeture par ressort ou par contre-poids.

A la figure 1, l'arbre (11) qui actionne le clapet (13) est conçu de préférence d'une seule pièce depuis son extrémité (16) jusqu'à son extrémité (17). Sur l'arbre (11) est monté un dispositif de sécurité contenu dans un tube (18) concentrique à l'arbre (11). Dans la zone (19) est monté un ressort (20) travaillant à la compression, ce ressort est donc constitué d'une multitude de spires (21) qui exercent, lorsqu'il est libéré, une poussée dans le sens de la flèche f.

Le ressort de compression (20) a une première fonction consistant à pousser sur le manchon (22). Une autre fonction du ressort de compression (20) est de libérer les crabots.

Cette libération des crabots (25) sera consécutive à l'éjection des billes (26) qui aura été provoquée par la fonte du fusible (27) consécutivement à l'incendie.

Il est à noter que le fusible (27) ne subit aucun effort de cisaillement, au cours de l'incendie ce fusible disparaît seulement et il provoque l'éjection des billes (26) et le décrabotage de la pièce (25) et donc la rotation de l'axe (11) qui provoque le déplacement du clapet d'une exploitation normale (10) à une position incendie (13) en appui sur le siège (8).

En cas d'incendie, le fusible (27) est détruit, ce qui provoque une action du ressort de compression (20) qui exerce une poussée axiale sur le crabot (25). Le déplacement axial du crabot expulse les billes (26). Le crabot (25) est déconnecté du manchon (33), ce qui provoque le déverrouillage de l'axe (11).

Lors de la poussée axiale du ressort (20), le manchon (22) décrit un mouvement hélicoïdal de par sa liaison avec le tube (18), rampe hélicoïdale et vis (28).

La liaison clavetée (29) permet au manchon (22) d'entraîner en rotation l'axe (11) sur 90°. La rotation de l'axe (11) provoque la fermeture du clapet. En position fermée (13), l'ensemble du dispositif assure un couple résistant et maintient le clapet (13) sur le siège (8).

On vient de décrire le fonctionnement du clapet à partir de fusibles déclenchés par l'incendie mais on a également prévu d'installer sur l'arbre (11) plusieurs dispositifs de sécurité en série qui pourront par exemple être pilotés par un autre phénomène et notamment la coupure du courant.

L'électro-aimant (30) n'est plus actif et les ressorts (31) poussent sur la cloche (32) qui libère ainsi les fusibles (27). Le ressort principal (20) exerce une poussée axiale sur le crabot (25) et le déplacement axial du crabot expulse les billes (26) et les fusibles (27). Le crabot est déconnecté du manchon (33) et l'axe (11) est déverrouillé. Sous la poussée axiale du ressort (20) travaillant à la compression, le manchon (22) décrit un mouvement hélicoïdal de par sa liaison avec le tube (18) (rampe hélicoïdale et vis). La rotation de l'arbre (11) provoque la fermeture du clapet de la position d'exploitation (10) à la position sécurité (13).

Pour permettre le fonctionnement de ce clapet à battant à fermeture automatique dans des conditions difficiles d'incendie, et assurer une étanchéité absolue entre le clapet et son siège (8), l'invention prévoit de réaliser les différents éléments du clapet dans des matériaux choisis comme de l'acier inox réfractaire ou des joints en graphite résistants au feu pour éviter toute détérioration.

Les moyens élastiques (20) qui travaillent à la compression autorisent même en cas d'incendie l'entraînement de l'arbre (11). En effet, le ressort (20) travaillant à la compression exerce le couple de fermeture et donc en permanence un effort de fermeture sur le siège (8) du clapet. Pour améliorer la sécurité du clapet, il est à noter que cet effort permanent de fermeture est réalisé quelle que soit la situation d'exploitation, situation incendie clapet en appui étanche sur le siège ou dans une situation d'extinction d'incendie avec injection d'eau dans le sens de la flèche S. Dans ce cas, le clapet se soulève momentanément tant que la pression est exercée puis retombe automatiquement sans aucune intervention humaine dès que cette pression cesse et que la lutte contre l'incendie s'arrête.

Les moyens élastiques (20) constitués notamment par le ressort à spires de la figure 1 travaillent à la compression, c'est-à-dire que, même s'il y a rupture de spire, le ressort continue à être guidé par l'alésage du tube (18). Le guidage des moyens élastiques (20) permettent donc de poursuivre l'action du ressort même s'il est endommagé par les conditions difficiles de l'incendie.

Pendant la lutte contre l'incendie et l'injection d'eau dans le clapet dans le sens de la flèche S, on injecte de l'eau à une certaine pression par exemple trois bars pour vaincre l'action des moyens élastiques (20) et provoquer l'ouverture partielle du clapet. Dans cette situation et malgré une rupture de spire, le ressort (20) maintient son action pour exercer sa double fonction de poussée sur le manchon (22) et sur le crabot (25).

Les différents éléments reliant le dispositif de sécurité proprement au clapet ont été choisis dans des matériaux particulièrement adaptés aux conditions difficiles de l'incendie. Ainsi, à titre d'exemple, on a réduit le nombre de zones d'étanchéité à une seule zone (36). On a utilisé une boîte à garniture graphite (36). Des bagues en graphite sont utilisées autour de l'arbre (11) pour assurer une étanchéité absolue contre les incendies. Des fusibles fondant à des températures prédéterminées libèrent les billes et l'axe (11) en rotation sous la poussée des moyens élastiques (20). On pourrait naturellement utiliser d'autres moyens que le fusible ou l'électro-aimant et commander la fermeture du clapet consécutivement à un autre risque, rupture de canalisation ou explosion.

La figure 2 montre une variante de la figure 1 dans laquelle le contre-poids (37) remplace l'effort du ressort (20).

Naturellement, d'autres mises en oeuvre de la présente invention, à la portée de l'Homme de l'Art, auraient également pu être envisagées sans pour autant sortir du cadre de celle-ci.

## Revendications

1. Clapet à battant à fermeture automatique destiné à isoler les tuyauteries ou une partie d'une installation de raffinage et de stockage de produits pétroliers plus particulièrement adapté en cas d'incendie comprenant :
- un corps de clapet et son siège,
- un clapet proprement dit articulé autour d'un arbre pour passer d'une position d'exploitation normalement ouverte à une position incendie ou sécurité normalement fermée en appui sur le siège,
caractérisé par le fait qu'il présente :
- des moyens élastiques travaillant à la compression et autorisant, même en cas d'incendie, l'entraînement de l'arbre,
- des fusibles pilotant les moyens élastiques,
- des moyens de guidage des moyens élastiques pour poursuivre l'action du ressort même s'il est endommagé,
pour faciliter le fonctionnement en cas d'incendie et réaliser une fermeture automatique étanche et positive.

2. Clapet à battant avec fermeture automatique destiné à isoler les tuyauteries en cas d'incendie, selon la revendication 1, caractérisé par le fait qu'un électro-aimant est monté en série avec les fusibles ou indépendamment.

3. Clapet à battant avec fermeture automatique destiné à isoler les tuyauteries en cas d'incendie, selon la revendication 1, caractérisé par le fait que le fusible ne subit pas d'effort de cisaillement ou de rupture, il fond seulement quand il y a incendie et libère les moyens élastiques qui agissent sur l'arbre du clapet.

4. Clapet à battant avec fermeture automatique destiné à isoler les tuyauteries en cas d'incendie, selon la revendication 1, caractérisé par le fait que la zone d'étanchéité entre le siège et le clapet proprement dit est une étanchéité métal-métal.

5. Clapet à battant avec fermeture automatique destiné à isoler les tuyauteries en cas d'incendie, selon la revendication 1, caractérisé par le fait qu'il y a toujours un effort de fermeture sur le clapet, qu'il soit en position incendie ou en position injection d'eau.

6. Clapet à battant avec fermeture automatique destiné à isoler les tuyauteries en cas d'incendie, selon la revendication 1, caractérisé par le fait qu'une seule zone d'étanchéité autour de l'arbre flottant est réalisée au moyen des bagues graphite permettant la protection en cas de feu.

7. Clapet à battant avec fermeture automatique destiné à isoler les tuyauteries en cas d'incendie, selon la revendication 1, caractérisé par le fait qu'il permet une injection de fluide de sécurité luttant contre l'incendie, notamment de l'eau, en sens contraire de l'exploitation normale, lorsque cette injection d'eau cesse le clapet revient en position de fermeture automatiquement et de façon étanche.
